# EUROPÄISCHE PATENTSCHRIFT

(11) **EP 1 171 270 B1**
(45) Veröffentlichungstag und Bekanntmachung des Hinweises auf die Patenterteilung: **21.01.2004**
(21) Anmeldenummer: 00929351.5
(22) Anmeldetag: 12.04.2000
(51) Int. Cl.: B27N 3/14

(54) **FORMSTATION**
FORMING STATION
POSTE DE FORMAGE

(30) Priorität: 12.04.1999 DE 19916462
(43) Veröffentlichungstag der Anmeldung: 16.01.2002
(73) Patentinhaber: Dieffenbacher Schenck Panel GmbH, 64319 Pfungstadt (DE)
(72) Erfinder: HENSCHEL, Walter, D-64853 Otzberg (DE); NATUS, Günter, D-64367 Mühltal (DE); WOLF, Lutz, D-64285 Darmstadt (DE)
(74) Vertreter: Behrens, Helmut, Dipl.-Ing.
(86) Internationale Anmeldenummer: PCT/EP2000/003281
(87) Internationale Veröffentlichungsnummer: WO 2000/061342

(56) Entgegenhaltungen:
- DE-A- 3 938 681
- DE-B- 1 088 697
- DE-C- 947 640
- GB-A- 2 136 754
- US-A- 4 038 531
- US-A- 4 247 497

## Beschreibung

Die Erfindung betrifft eine Formstation für Span- oder Faserplatten nach dem Oberbegriff des Patentanspruchs 1.

Bei der Herstellung von Span- und Faserplatten werden mittels einer Formstation rieselfähige Güter wie mit Bindemitteln versehene Späne oder Fasern aus einem Dosierbunker ausgetragen und über eine Fördervorrichtung einem Streukopf zugeführt. Durch den Streukopf wird auf ein kontinuierlich laufendes Formband ein Materialvlies aus den Spänen oder Fasern aufgestreut, das dann in einer Preßstation zu einer Platte verpreßt wird. Da mit derartigen Formstationen meist Platten unterschiedlicher Dicke und unterschiedlicher Materialzusammensetzungen gestreut werden sollen, muß die Streuung des Materialvlieses genau regelbar sein, um eine möglichst gleichbleibende homogene Plattenqualität herstellen zu können.

Eine derartige Streustation ist aus dem Firmenprospekt "Formstation", SP 0208, Ausgabe März 1985 der Firma Carl Schenck AG in Darmstadt vorbekannt. Diese Formstation besteht aus einem Dosierbunker, aus dem die beleimten Späne mittels eines Bodenbandes und Austragswalzen über die gesamte Breite ausgetragen werden. Dieser konstante Spänestrom wird mittels einer Fördervorrichtung dem Streukopf zugeführt, der die Späne zu einem Materialvlies auf ein darunter angeordnetes kontinuierlich laufendes Formband streut. Dabei ist dieser gesamte Ablauf des Materialflusses automatisch regelbar. Dazu ist hinter dem Streukopf eine Flächengewichtswaage angeordnet, die das Ist-Flächengewicht (kg/m²) ermittelt und mit einem vorgegebenen Soll-Flächengewichtswert vergleicht. Die ermittelte Regelabweichung wird dann durch entsprechende Steuerung der Fördergeschwindigkeit der Austragswalzen und des Bodenbandes im Dosierbunker ausgeregelt. Durch die Regelung der Fördergeschwindigkeit der Austragswalzen und des Bodenbandes wird nicht berücksichtigt, daß das Austragsmaterial der Späne oder Fasern stark von dessen Rieselfähigkeit, dessen spezifischem Gewicht als auch von dessen Beleimungsgrad abhängig ist. Eine derartige Regelung ist daher verhältnismäßig ungenau und meist nur in längeren Zyklen regelbar, wobei in der Zwischenzeit erhebliche Mengen abweichendes Faservlies gestreut wird, das zu Platten mit minderer Qualität führt.

Aus der DE 39 38 681 A1 ist eine Anlage zum Aufstreuen von Holzwerkstoff-Streugut auf ein Formband bekannt. Dazu ist ein Dosierbunker mit einem Austragsband vorgesehen, durch den die beleimten Späne oder Fasern auf ein darunter liegendes Egalisierungsband als Vorvlies abgelegt werden. Das Egalisierungsband besteht aus einem horizontalen Förderband, unter dem in Querrichtung eine Reihe Profilstößel angeordnet sind, durch die die Bandlaufhöhe in Querrichtung einstellbar ist. Oberhalb dieser Profilstößel ist in einem gewissen Abstand eine Egalisierungswalze angeordnet, die das Vorvlies auf dem Egalisierungsband in der Höhe abkämmend begrenzt. Über das Egalisierungsband wird das Vorvlies auf einen Scheibenstreukopf aufgegeben, der die Spänemenge auf ein Formband als Vlies aufstreut. Über dem Formband ist eine Streuprofilhöhenmeßvorrichtung angeordnet, die das Höhenprofil des Vlieses abtastet. Dieses Höhenprofil wird in der Meßvorrichtung ausgewertet, die die Profilstößel so ansteuert, daß das ausgestreute Höhenprofil durch die Zuführung zum Scheibenstreukopf ausgeglichen wird. Diese volumetrische Zuführregelung ist speziell auf das Streuprofil eines Scheibenstreukopfes abgestimmt, und deshalb nicht geeignet, die Plattenqualität auch beim Einsatz anderer Streuköpfe zu verbessern.

Der Erfindung liegt deshalb die Aufgabe zugrunde, die Regelung des Materialflusses so zu verbessern, daß die Masse des gestreuten Materialvlieses sehr konstant ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den vorteil, daß durch die regelbare gravimetrische Dosierung vor der Streuvorrichtung stets die notwendige Materialmasse herangeführt wird, die zu einer gleichmäßigen Streuung bei einem vorgegebenen Flächengewicht des Materialvlieses notwendig ist. Da die Qualität der fertigen Platte von einem gleichbleibenden gleichmäßigen Gewicht des ausgestreuten Materialvlieses abhängig ist, kann vorteilhafterweise durch die Erfindung bereits die herangeführte Materialmenge gewichtsmäßig so geregelt werden, daß gerade in der Anlaufphase oder einer Umstellungsphase des Herstellungsprozesses wenig Ausschußmaterial produziert wird.

Mit der Erfindung ist vorteilhafterweise auch eine hohe Regelungsgüte des ausgestreuten Materialvlieses erreichbar, da unmittelbar über das erfaßte Gewicht des zugeführten Materials das vorgegebene Flächengewicht des auszustreuenden Materials geregelt wird. Dadurch wird vorteilhafterweise auch eine sehr stabile und rasche Ausregelbarkeit bei einer Regelabweichung erreicht, da beim herangeführten Material unmittelbar vor dem Austreuvorgang eine Abweichung erfaßt und sogleich gewichtsmäßig nachgeregelt wird.

Die Erfindung wird anhand eines Ausführungsbeispiels, das in der Zeichnung dargestellt ist, näher erläutert. Es zeigen:
- Fig. 1:: eine Formstation mit Dosierbunker, Dosierbandwaage, Streukopf und Formband, und
- Fig. 2:: eine Formstation mit Dosierbunker, Dosierbandwaage, Streukopf und Formband mit Flächengewichtswaage.

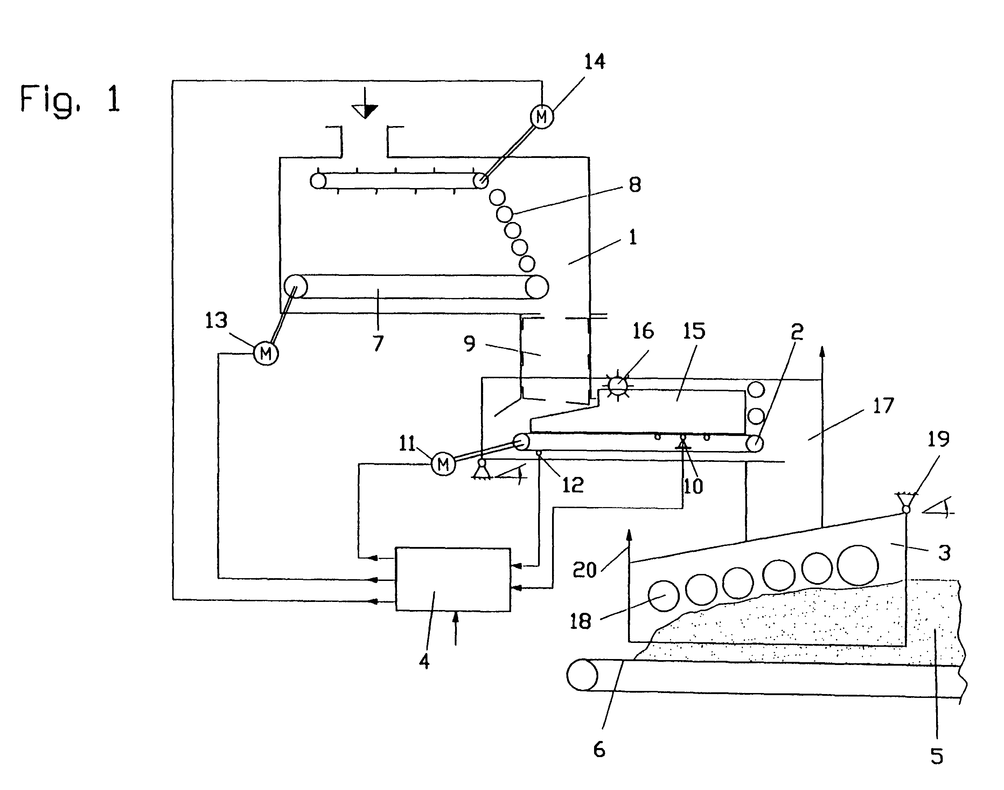

In Fig. 1 der Zeichnung ist eine Streustation dargestellt, die einen Dosierbunker 1 mit nachfolgender regelbarer Dosierbandwaage 2 mit Regler 4, einen Streukopf 3 und ein Formband 6 enthält.

Der Dosierbunker 1 enthält regelbare Austragswalzen 8 und ein regelbares Bodenband 7 mit der die Austragsmenge aus dem Dosierbunker 1 regelbar ist. Die in dem Dosierbunker 1 befindlichen rieselfähigen Güter, wie beispielsweise beleimte Holzfasern oder Späne werden über die gesamte Breite aus dem Dosierbunker 1 ausgetragen. Unterhalb des Dosierbunkers 1 ist die regelbare Dosierbandwaage 2 angeordnet, der der Materialstrom über einen Zuführschacht 9 zugeführt wird. Die Dosierbandwaage 2 enthält eine oder mehrere gravimetrische Wägevorrichtungen, die das über das Band bewegte Gewicht pro Fläche und Zeit als Förderstärke [kg/s] Zuführrate erfassen. Meist wird dies über eine oder mehrere auf Wägezellen gelagerte Stützrollenstation 10 erreicht. Die Dosierbandwaage 2 besitzt weiterhin einen geschwindigkeitsgeregelten Antriebsmotor 11, der das Förderband mit einer vorgegebenen oder geregelten Geschwindigkeit antreibt. An der Unterseite der Dosierbandwaage 2 ist noch ein Geschwindigkeitssensor 12 angeordnet, mit dem die Ist-Fördergeschwindigkeit oder Bandgeschwindigkeit der Dosierbandwaage 2 erfaßt wird. Der Geschwindigkeitssensor 12 ist meist als Reibrad mit gekoppeltem Impulsgenerator ausgebildet, der Spannungsimpulse erzeugt, deren Anzahl der Bandgeschwindigkeit proportional sind.

Mit der Dosierbandwaage 2 ist eine Regeleinrichtung 4 verbunden, der sowohl die Gewichts- als auch die Geschwindigkeitssignale zugeführt werden. Ausgangsseitig ist die Regeleinrichtung 4 noch mit dem Antriebsmotor 11 der Dosierbandwaage 2, dem Antriebsmotor 13 des Bodenbandes und dem Antriebsmotor 14 des Austragswalzensatzes verbunden. Die Dosierbandwaage 2 ist oberhalb des Förderbandes mit verstellbaren Seitenwänden versehen, mit denen die gewünschte Förder- oder Streubreite einstellbar ist. Zusätzlich ist noch eine höhenverstellbare Egalisierungswalze 16 vorgesehen, mit der das Span- oder Fasermaterial vergleichmäßigt wird.

Am Ende der Dosierbandwaage 2 ist ein vertikaler Schacht 17 angeordnet, durch den das kontinuierlich geförderte Faseroder Spanmaterial in den Streukopf 3 gegeben wird. Im Streukopf 3 sind mehrere quer zur Förderrichtung angeordnete Streuwalzen 18 vorgesehen, durch die ein Materialvlies 5 auf das Formband 6 gestreut und einer nachfolgenden Vorpresse oder Plattenpresse zugeführt wird. Da bei derartigen Plattenherstellungsprozessen meist kontinuierliche Preßstationen eingesetzt werden, muß das Formband 6 mit konstanter vorgegebener Formbandgeschwindigkeit angetrieben werden. Soweit mit dem Streukopf 3 Faserplatten gestreut werden sollen, ist der Streukopf 3 über ein Drehlagerelement 19 und einer nicht dargestellten Hubvorrichtung 20 höhenverstellbar angeordnet, wobei sich die einzustellende Höhe aus der herzustellenden Plattendicke ergibt.

Die vorbeschriebene Streustation nach Fig. 1 der Zeichnung arbeitet nach folgendem Verfahren:

Der Dosierbunker 1 wird im Betrieb kontinuierlich mit beleimten Spänen oder Fasern befüllt. Aufgrund der gewünschten Plattendicke und -breite muß kontinuierlich eine vorgegebene Vlieshöhe und -breite auf das Formband 6 aufgestreut werden. Daraus ergibt sich eine vorgegebene Fördermenge an Faser- oder Spänematerial, das dem Streukopf zuführbar ist. Eine entsprechende Soll-Förderstärke als Masse pro Zeit ist der Regeleinrichtung 4 vorgebbar. Die Regeleinrichtung kann aber auch so ausgebildet sein, daß lediglich die zu produzierende Plattendicke vorgebbar ist, woraus dann über die zu streuende Vliesdicke die Soll-Förderstärke ermittelbar ist. Daraus errechnet die Regeleinrichtung 4 eine bestimmte Fördergeschwindigkeit der Austragselemente wie dem Bodenband 7 und der Austragswalzen 8 und stellt deren Antriebsmotoren 13, 14 auf die entsprechende Drehzahl ein. Der Dosierbunker 1 kann aber auch durch andere Steuerungsorgane mit der entsprechenden Austragsgeschwindigkeit gesteuert werden.

Durch die Einstellung der Austragsgeschwindigkeit des Dosierbunkers 1 wird auf das Förderband der kontinuierlich fördernden Dosierbandwaage 2 eine voraussichtlich erforderliche Materialschicht aufgegeben, die durch die höhenverstellbare Egalisierungswalze 16 vergleichmäßigt wird. Mit Hilfe der Wägeeinrichtung 10 (Bandbeladung) und der ermittelten Bandgeschwindigkeit errechnet die Regeleinrichtung 4 eine Ist-Förderstärke als Masse pro Zeit mit der der Streukopf mit Spänen oder Fasern versorgt wird. Soweit dies von der Soll-Förderstärke [kg/s] abweicht, bildet die Regeleinrichtung 4 daraus ein entsprechendes Regelabweichungssignal, wodurch die Bandgeschwindigkeit durch den Antriebsmotor 11 entsprechend nachgeregelt wird.

Weicht gleichzeitig die Bandbeladung von einem vorgegebenen Wert ab, wird durch die Regeleinrichtung 4 auch gleichzeitig die Austragsgeschwindigkeit aus dem Dosierbunker 1 entsprechend geregelt. Dadurch ist auf einfache Weise die Streumenge genau regelbar, die auf das Formband 6 aufgestreut wird. Insbesondere sind hierdurch Austragsungenauigkeiten aus dem Dosierbunker 1 genau ausregelbar, bevor ein nicht der Plattendicke und -breite entsprechendes Materialvlies 5 auf dem Formband 6 aufgestreut wird, das in der Regel zu Platten minderer Qualität führt.

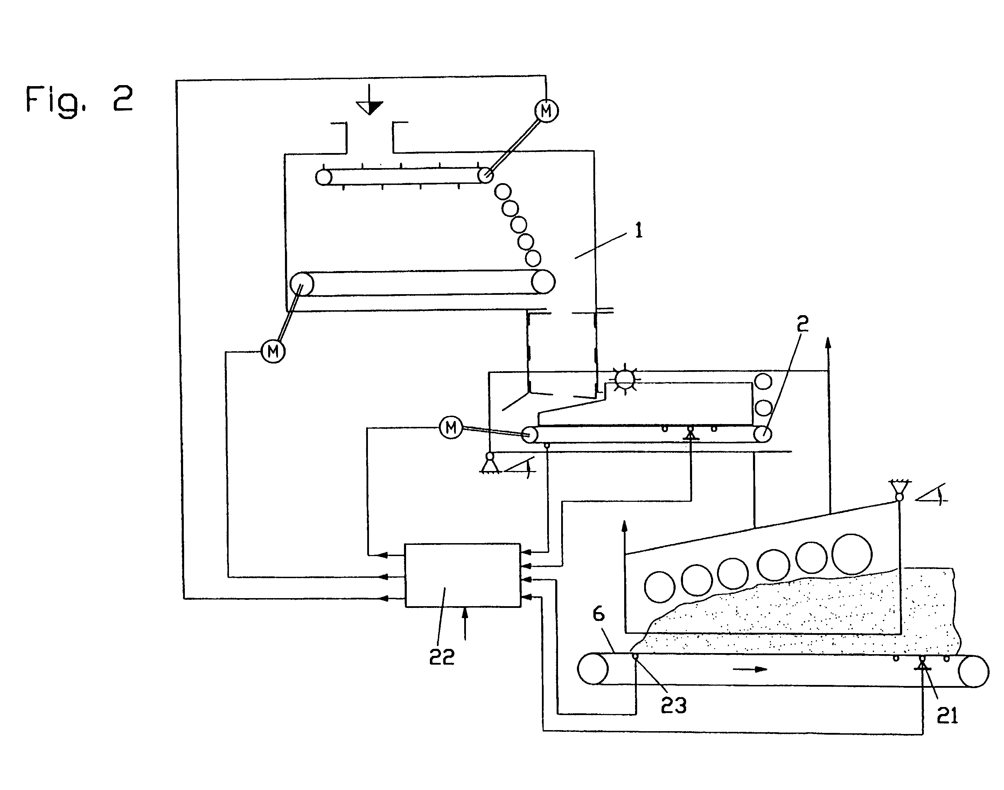

In Fig. 2 der Zeichnung ist ebenfalls eine Streustation wie nach Fig. 1 dargestellt, wobei allerdings noch zusätzlich eine Flächengewichtswaage 21 im Formband 6 vorgesehen ist. Weiterhin enthält die Regeleinrichtung 22 noch einen zusätzlichen Eingang, dem das Ist-Vliesgewicht auf dem Formband 6 zugeführt wird. Die Bezugszeichen der Fig. 2 entsprechen im übrigen den funktionsgleichen Teilen der Fig. 1 der Zeichnung. Soweit das Formband nicht mit vorgegebener Bandgeschwindigkeit betrieben wird, ist noch ein zusätzlicher Geschwindigkeitssensor 23 vorgesehen, mit dessen Hilfe die Förderstärke auf dem Formband 6 bestimmbar ist. Durch die Flächengewichtswaage 21 im Formband 6 ist sehr genau die auf das Formband 6 aufgestreute Masse des Faser- oder Spänevlieses feststellbar, deren Einhaltung ein wesentlicher Faktor für die Qualität der fertigen Platten ist. Die Flächengewichtswaage 21 ermöglicht deshalb eine Verbesserung der Regelgenauigkeit gegenüber der Ausbildung nach Fig. 1 der Zeichnung, da hierdurch auch Streuungenauigkeiten im Streukopf 3 berücksichtigbar sind. Der Regeleinrichtung 22 ist deshalb aufgrund der gewünschten Plattendicke und Breite lediglich das dafür vorgegebene Vliesgewicht bzw. die Vliesförderstärke als Sollwert vorgebbar. Daraus bestimmt die Regeleinrichtung 22 eine bestimmte Austragsgeschwindigkeit aus dem Dosierbunker 1 und eine bestimmte Förderstärke auf dem Dosierband der Dosierbandwaage 2. Die Regelung der Dosierbandwaage 2 und des Dosierbunkers 1 erfolgt im wesentlichen wie bereits zu Fig. 1 der Zeichnung beschrieben. Allerdings erfolgt eine Nachregelung der Dosierbandwaage 2, wenn durch die vorbestimmte Soll-Förderstärkenrate das vorgegebene Vliesgewicht nicht eingehalten wird. Bei einer Abweichung vom Soll-Vliesgewicht wird deshalb durch die Regeleinrichtung 22 die Soll-Förderstärke der Dosierbandwaage 2 erneut ermittelt und entsprechend ausgeregelt. Durch eine derartige zweistufige gravimetrische Regelung ist das vorgegebene Vliesgewicht sehr genau einhaltbar, da in der Dosierbandregelung bereits frühzeitig Gewichtsschwankungen im Späne- oder Fasermaterial berücksichtigt werden können, so daß auch bei Fertigungsumstellungen und -änderungen die Ausschußrate der Plattenproduktion minimierbar ist. Dabei kann die Regeleinrichtung 22 auch in der Dosierbandregelung mit integriert sein. Eine derartige Regelung kann aber auch in der Steuervorrichtung zur Produktionssteuerung als Programmsteuerung mit vorgesehen sein, wobei auch noch zusätzliche Produktionsparameter mit berücksichtigbar sind.

## Patentansprüche

1. Formstation mit mindestens einem Dosierbunker (1), aus dem rieselfähige Güter, insbesondere mit Bindemittel versehene Späne oder Fasern, ausgetragen und über eine Fördervorrichtung (2) mindestens einer Streuvorrichtung (3) zugeführt werden, die die Späne oder Fasern in einer steuerbaren Menge auf ein Formband (6) aufstreut, **dadurch gekennzeichnet, daß** als Fördervorrichtung zwischen dem Dosierbunker (1) und der Streuvorrichtung (3) eine Dosierbandwaage (2) vorgesehen ist, durch die die Ist-Förderstärke als Masse pro Zeiteinheit des zugeführten Materialstroms ermittelt wird und daß eine Regeleinrichtung (2) vorgesehen ist, die aufgrund der ermittelten Ist-Förderstärke [kg/s] und unter Berücksichtigung einer vorgegebenen Soll-Förderstärke [kg/s] die Förderung der Dosierbandwaage regelt.

2. Formstation nach Anspruch 1, **dadurch gekennzeichnet, daß** in der Dosierbandwaage (2) eine gravimetrische Wägevorrichtung (10) und eine Bandgeschwindigkeitserfassungsvorrichtung (12) vorgesehen ist, aus der eine Regeleinrichtung (4) die Ist-Förderstärke [kg/s] ermittelt, wobei bei einer Abweichung von einer vorgegebenen Soll-Förderstärke [kg/s] die Förderbandgeschwindigkeit geregelt wird.

3. Formstation nach einem der vorhergehenden Ansprüche, **dadurch gekennzeichnet, daß** die Regeleinrichtung (4) so ausgebildet ist, daß bei einer bestimmten Abweichung von einer vorgegebenen Bandbeladung die Geschwindigkeit der Austragselemente (7, 8) des Dosierbunkers (1) nachgeregelt werden.

4. Formstation nach einem der vorhergehenden Ansprüche, **dadurch gekennzeichnet, daß** die Dosierbandwaage (2) mit verstellbaren Seitenwänden (15) versehen ist, die entsprechend der gewünschten Vliesbreite einstellbar sind.

5. Formstation nach einem der vorhergehenden Ansprüche, **dadurch gekennzeichnet, daß** im Formband (6) eine Flächengewichtswaage (21) vorgesehen ist, durch die der Regeleinrichtung (22) das Ist-Vliesgewicht oder die Ist-Vliesförderstärke [kg/s] zugeführt wird und mit einem vorgegebenen Soll-Vliesgewicht bzw. einer Vliesförderstärke vergleicht und bei einer Regelabweichung die Förderstärke der Dosierbandwaage (2) entsprechend nachregelt.

6. Formstation nach einem der vorhergehenden Ansprüche, **dadurch gekennzeichnet, daß** die Regeleinrichtung (4, 22) als Regelung der Dosierbandwaage (2) oder als Teil einer programmgesteuerten Produktionssteuerung vorgesehen ist.

## Claims

1. Moulding station with at least one metering hopper (1), from which flowable goods, in particular chips or fibres provided with binding agent, are discharged and fed via a transport device (2) to at least one spraying device (3), which sprays the chips or fibres in a controllable quantity onto a moulding belt (6), **characterised in that** a distributing belt weigher (2) is provided as transport device between the metering hopper (1) and the spraying device (3), through which distributing belt weigher the actual delivery rate is determined as mass per unit time of the material flow delivered, and that a control device (2) is provided, which controls the delivery of the distributing belt weigher on the basis of the determined actual delivery rate [kg/s] and taking into consideration a predetermined scheduled delivery rate [kg/s].

2. Moulding station according to Claim 1, **characterised in that** in the distributing belt weigher (2) a gravimetric weighing device (10) and a belt speed detection device (12) are provided, from which a control device (4) determines the actual delivery rate [kg/s], wherein the transport belt speed is controlled in the case of a deviation from a predetermined scheduled delivery rate [kg/s].

3. Moulding station according to one of the preceding claims, **characterised in that** the control device (4) is configured such that the speed of the discharging elements (7, 8) of the metering hopper (1) is adjusted in the case of a specific deviation from a predetermined belt load.

4. Moulding station according to one of the preceding claims, **characterised in that** the distributing belt weigher (2) is provided with adjustable side walls (15), which are adjustable in keeping with the desired width of the fabric material.

5. Moulding station according to one of the preceding claims, **characterised in that** a weight per unit area weigher (21) is provided in the moulding belt (6), through which weigher the actual weight of the fabric material or the actual delivery rate [kg/s] of the fabric material is fed to the control device (22), and is compared with a predetermined scheduled weight of the fabric material or a delivery rate of the fabric material, and the delivery rate of the distributing belt weigher (2) is adjusted accordingly in the case of a deviation in control.

6. Moulding station according to one of the preceding claims, **characterised in that** the control device (4, 22) is provided as control means of the distributing belt weigher (2) or as part of a program-controlled production control system.

## Revendications

1. Poste de moulage avec au moins une trémie de dosage (1) hors de laquelle des produits coulants, en particulier des copeaux ou des fibres munis de liant, sont déchargés et amenés par un dispositif de transport (2) à au moins un dispositif de dispersion (3) qui disperse les copeaux ou les fibres en une quantité réglable sur une bande de moulage (6), **caractérisé en ce qu'**une bascule de bande doseuse (2), grâce à laquelle la force de transport effective est déterminée comme masse par unité de temps du flux de matière amené, est prévue comme dispositif de transport entre la trémie de dosage (1) et le dispositif de dispersion (3) et **en ce qu'**il est prévu un dispositif de réglage (2) qui règle le transport de la bascule de bande doseuse d'après la force de transport effective déterminée (kg/s) et en tenant compte d'une force de transport de consigne prédéterminée (kg/s).

2. Poste de moulage selon la revendication 1, **caractérisé en ce qu'**un dispositif de pesage gravimétrique (10) et un dispositif de détection de bande (12), à partir desquels un dispositif de réglage (2) détermine la force de transport effective (kg/s), sont prévus dans la bascule de bande doseuse (2), la vitesse de la bande étant réglée en cas d'écart par rapport à une force de transport de consigne prédéterminée (kg/s).

3. Poste de moulage selon l'une quelconque des revendications précédentes, **caractérisé en ce que** le dispositif de réglage (4) est configuré de telle manière qu'en cas d'un écart déterminé par rapport à un chargement de bande prédéterminé, la vitesse des éléments de déchargement (7, 8) de la trémie de dosage (1) est réglée de nouveau.

4. Poste de moulage selon l'une quelconque des revendications précédentes, **caractérisé en ce que** la bascule de bande doseuse (2) est munie de parois latérales déplaçables (15) qui sont réglables en fonction de la largeur du non-tissé souhaitée.

5. Poste de moulage selon l'une quelconque des revendications précédentes, **caractérisé en ce que**, dans la bande de moulage (6), une balance de grammage (21) est prévue par laquelle le poids effectif du non-tissé ou la force de transport effective du non-tissé (kg/s) est amené au dispositif de réglage (22) et comparé avec un poids de consigne du non-tissé prédéterminé ou une force de transport du non-tissé prédéterminée et en cas d'écart de réglage, la force de transport de la bascule de bande doseuse (2) est réglée de nouveau de manière correspondante.

6. Poste de moulage selon l'une quelconque des revendications précédentes, **caractérisé en ce que** le dispositif de réglage (4, 22) est prévu comme réglage de la bascule de bande doseuse (2) ou comme partie d'une commande de production commandée par automate.
